# EUROPÄISCHE PATENTANMELDUNG

(11) **EP 2 801 639 A1**
(43) Veröffentlichungstag der Anmeldung: **12.11.2014**
(21) Anmeldenummer: 13166930.1
(22) Anmeldetag: 08.05.2013
(51) Int. Cl.: C23C 10/48, B23K 9/00, B23P 6/00, C23C 10/50, C23C 10/60, F01D 5/00, C23C 16/00

(54) **Schweißen von alitierten Komponenten und eine alitierte Komponente**

(71) Anmelder: Siemens Aktiengesellschaft, 80333 München (DE)
(72) Erfinder: Seipold, Frank, 13158 Berlin (DE); Sperlich, Kathrin, 10555 Berlin (DE)

(57) **Zusammenfassung**

Durch die teilweise Entfernung einer notwendigen Alitierung vor der Schweißung einer alitierten Komponente wird die Schweißung erst ermöglicht.

## Beschreibung

Die Erfindung betrifft das Schweißen von alitierten Komponenten und eine alitierte Komponente.

Gasturbinenkomponenten wie z.B. Brennerkomponenten weisen Stähle auf, die zur Verbesserung der Korrosion alitiert sind.

Bisher wurden solche Komponenten nicht repariert.

Es ist daher Aufgabe der Erfindung ein Verfahren aufzuzeigen, mit dem alitierte Komponenten repariert oder geschweißt werden können.

Die Aufgabe wird gelöst durch ein Verfahren gemäß Anspruch 1 und eine Komponente gemäß Anspruch 9.

In den Unteransprüchen sind weitere vorteilhafte Maßnahmen aufgelistet, die beliebig miteinander kombiniert werden können, um weitere Vorteile zu erzielen.

Durch die Verfahrensmerkmale und die Komponentenmerkmale sind Komponenten, die alitiert sind, zu schweißen bzw. weisen eine vorteilhafte Schweißung auf.

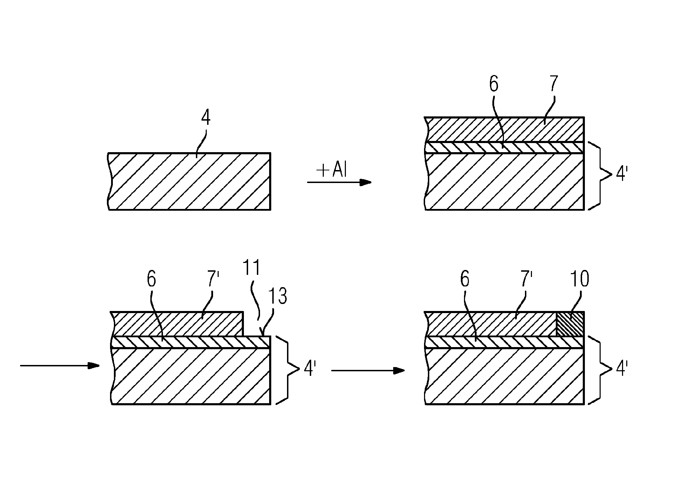

Die Figur und die Beschreibung stellen nur Ausführungsbeispiele der Erfindung dar.

Es zeigen die Figur schematisch den Ablauf des erfindungsgemäßen Verfahrens und die erfindungsgemäße Komponente.

Ein Substrat 4, insbesondere aus einem Stahl, ganz insbesondere aus 16Mo3, soll geschweißt oder repariert werden. Dabei wird in einem ersten Schritt eine Alitierung (+Al) durchgeführt, die zu einer Diffusionsschicht 6 innerhalb des Substrats 4 und dieses zu einem modifizierten Substrat 4' führt und eine Aufbauschicht 7 erzeugt.

Die Alitierung kann auch nur lokal durchgeführt werden.

Die Diffusionsschicht 6 weist vorzugweise eine Tiefe von 150µm bis 300µm auf.

Die Aufbauschicht 7 weist vorzugsweise ein Dicke von 100µm auf.

Ein Teil der Aufbauschicht 7 wird insbesondere lokal von der Oberfläche 13 der Diffusionsschicht 6 entfernt, so dass nur ein Rest 7' der Aufbauschicht vorhanden ist, wobei die Aufbauschicht größtenteils, insbesondere vollständig bezüglich ihrer Dicke entfernt wird und somit eine Oberfläche 13 der Diffusionsschicht 6 eine äußere Oberfläche bildet. Das lokale Entfernen der Aufbauschicht ist dann sinnvoll, wenn nur ein Teil der alitierten Oberfläche des Substrats 4' geschweißt werden soll.

Im nächsten Schritt wird der freigelegte Bereich 11 der Oberfläche 13 mit einer Schweißung 10 versehen.

Die Vorgehensweise nach dem Stand der Technik bestand darin, nur die oxidierte Oberfläche von Aluminium der Aufbauschicht 7 zu entfernen.

Die Entfernung des Teils der Aufbauschicht 7 kann chemisch und/oder mechanisch und/oder durch Laserabtragung erfolgen.

Durch die Schweißung 10 können Brennerkomponenten miteinander verschweißt werden oder es wird Material zur Wandverdickung aufgebaut.

Die reparierte Komponente weist ein Substrat 4' mit einer Diffusionsschicht 6 und einer Schweißung 10 auf der Diffusionsschicht 6 zusammen mit einer Aufbauschicht 7' auf der Oberfläche 13 der Diffusionsschicht 6 nebeneinander auf.

## Patentansprüche

1. Verfahren
zum Reparieren eines Bauteils mit einem Substrat (4),
bei dem eine Alitierung des Substrats (4) durchgeführt wird,
die zu einer Diffusionsschicht (6) im Substrat (4) und zu einer Aufbauschicht (7) auf der Diffusionsschicht (6) führt,
wobei in einem nächsten Schritt teilweise die Aufbauschicht (7) entfernt wird,
insbesondere lokal vollständig entfernt wird,
ganz insbesondere vollständig entfernt wird,
und dann eine Schweißung (10) im Bereich (11) des entfernten Materials der Aufbauschicht (7) durchgeführt wird.

2. Verfahren nach Anspruch 1,
bei dem das Substrat (4) ein Stahl darstellt,
insbesondere Molybdänhaltiger Stahl,
ganz insbesondere 16Mo3.

3. Verfahren nach einem oder beiden der Ansprüche 1 oder 2, bei dem das Substrat (4) nur teilweise alitiert wird.

4. Verfahren nach einem oder mehreren der vorhergehenden Ansprüche 1, 2 oder 3,
bei dem bezüglich der Dicke der Aufbauschicht (7) nur ein Teil der Dicke der Aufbauschicht (7) entfernt wird.

5. Verfahren nach einem oder mehreren der vorhergehenden Ansprüche 1, 2 oder 3,
bei dem die Aufbauschicht (7) bis zur Oberfläche (13) der Diffusionsschicht (6) abgetragen wird.

6. Verfahren nach einem oder mehreren der vorhergehenden Ansprüche,
bei dem die Aufbauschicht (7) nur lokal von der Oberfläche (13) entfernt wird.

7. Verfahren nach einem oder mehreren der vorhergehenden Ansprüche,
bei dem als Material für die Auftragsschweißung Stahl verwendet wird,
insbesondere Molybdänhaltiger Stahl,
ganz insbesondere 16Mo3.

8. Verfahren nach einem oder mehreren der vorhergehenden Ansprüche,
bei dem das Substrat (4) des Bauteils bereits eine Alitierung aufweist.

9. Komponente,
die aus einem alitierten Substrat (4) mit einer Diffusionsschicht (6) innerhalb des Substrats (4') besteht,
wobei auf der Diffusionsschicht (6) sowohl die bei der Alitierung entstandene Aufbauschicht (7') und eine Schweißung (10) vorhanden ist.

10. Komponente nach Anspruch 9,
bei dem das Substrat (4) des Bauteils bereits eine Alitierung aufweist.

11. Komponenten nach einem oder beiden der Ansprüche 9 oder 10,
die eine reparierte Komponente darstellt.

12. Komponenten nach einem oder mehreren der Ansprüche 9, 10 oder 11,
bei der die Schweißung (10) direkt auf der Diffusionsschicht (6) vorhanden ist.
